# EUROPEAN PATENT APPLICATION

(11) **EP 1 134 941 A1**
(43) Date of publication of application: **19.09.2001**
(21) Application number: 00850044.9
(22) Date of filing: 15.03.2000
(51) Int. Cl.: H04L 12/56, H04L 29/06

(54) **Method and arrangement for flow control**

(71) Applicant: TELEFONAKTIEBOLAGET LM ERICSSON (publ), 126 53 Stockholm (SE)
(72) Inventor: Sundqvist, Jim, 976 32 Lulea (SE)
(74) Representative: Nyberg, Bengt

(57) **Abstract**

The present invention relates to a method and an arrangement for giving a user of a terminal a possibility to control the bandwidth of application flows in and out of his terminal in accordance with his preferences. The invention thus provides the user with a possibility to speed up applications that he finds important by restricting application flows to applications that he finds less important. Incoming application flows are controlled by manipulating window sizes (66) that are reported to the respective senders of the incoming data on the respective incoming application flows. Outgoing data flows are controlled by supervising the sending times of data packets (64) on the different outgoing application flows. Control decisions are based on information about the user's preferences, which is stored in memory in the terminal, (63, 65).

## Description

### FIELD OF THE INVENTION

The present invention relates to flow control in a communications system and to control of flows to and from applications on a terminal in a communications system in particular.

### BACKGROUND OF THE INVENTION

Terminals in a communications system, wireline or wireless, have access to a certain limited bandwidth for communication with other terminals. The available bandwidth can be shared by different flows of information, e.g. information to and from different applications on the terminal.

Information that is sent in a communications network is often checked and controlled so that it is directed to the right receiver, is not distorted, is delivered in time etc. Handling of the flows of information is simplified by means of protocols in several layers. In packet switched networks today is the protocol stack TCP/IP very common. It includes four layers; a physical layer (also called data link layer), an Internet layer, a transport layer and an application layer. The layers are relatively independent of each other and have different purposes and tasks. The layers simplify the handling of flows since for instance a person involved in design work can focus on one layer at a time without having to take in consideration how the other layers work. With each layer one or several protocols are associated.

The physical layer provides a uniform bit stream on some kind of transmission media. It can also check and compensate for errors in the bit stream. Associated with the physical layer are protocols that are interfaces towards different types of networks, such as for instance Ethernet, Token Ring and X.25.

Within the Internet layer addressing, routing and fragmentation are handled by IP (Internet Protocol). IP is responsible for logical addresses, called IP addresses, and for moving data between the physical layer and the transport layer. IP defines the structure of data packets, which are called datagrams.

The protocols of the transport layer are responsible for the transport of data between terminals or hosts and for data being delivered to the right application in the application layer. The transport protocols will also package data in segments of suitable size for transportation through the Internet system. The two transport protocols in TCP/IP are UDP (User Datagram Protocol) and TCP (Transmission Control Protocol).

UDP is a connectionless protocol, which does not include any mechanisms for flow control or error correction. UDP works simply as a multiplexer/demultiplexer for transmission and reception of datagrams. Port numbers are used to send the datagrams to the right application. UDP is especially suited for real time services where retransmissions due to lost or erroneous packets are out of scope due to the real time requirements. An example of such a service is VoIP (Voice over IP).

TCP is a connection oriented protocol which provides a reliable data transfer between two hosts. Port numbers are used, as in UDP, to separate data flows to different applications on a terminal or host. TCP includes a number of mechanisms or procedures, which serve to make the transfer of data reliable. A connection between a source node and a destination node is set up by TCP by means of a three-way handshake. First a synchronisation signal is sent from the source node to the destination node. The destination node returns an acknowledgement (ACK), and also its own synchronisation signal, to the source node. The source node acknowledges that signal, whereby a connection is established and the transfer of data can now be carried out in a reliable way. The established reliable connection is unique and is identified by the communicating parties' IP addresses and by the port numbers that are used for the connection. Each data packet that is transferred is sent together with a sequence number, which is used to reassemble the data in the right order in the destination node and to keep track of the number of bytes that have been sent. TCP expects an acknowledgement (ACK) from the destination node for each packet. If an ACK is not received within a certain period of time, the current data packet is resent. TCP includes means for flow control in the form of a so-called window mechanism. It relies upon that TCP in a destination node, along with an ACK, also sends a window size, which indicates the number of additional bytes that the destination node can receive, at the moment, without risking overrun in internal buffers. The window size is sent in the form of the highest sequence number that the receiving application can receive without difficulty. TCP is used for data transferring services such as file transfer by FTP (File Transfer Protocol) and Telnet, for which it usually is important that each byte of data that is sent, reaches its destination.

The application layer includes hundreds of application protocols. A few examples are Telnet, FTP, SMTP and HTTP. Some applications simply rely on a transport protocol in the transport layer, instead of using a special application protocol.

In the European patent application EP-924902 and in the international patent application WO98/20511 methods for controlling flows of data in communications networks are described. In said European patent application bandwidth control is achieved by adjusting the window size in TCP to a value, which is a function of the used bandwidth and the desired bandwidth. In said international patent application flow control is achieved by introducing a controllable delay of ACK-messages and by adjusting the window size.

The international patent application WO99/16266 describes flow control, which aims at letting a communications system direct application flows to the type of bearer service, e.g. a circuit switched or a packet switched bearer service, which is most suitable for the application, and to adjust QoS (Quality of Service) parameters according to the demands of the current application.

### SUMMARY OF THE INVENTION

A problem with the different variants of flow control that are known from the above-mentioned patent applications is that none of these control mechanisms give control over bandwidth in such a way that consideration is taken to individual users' preferences. A user may with the prior art variants of flow control think that his terminal doesn't perform the way he would want it to.

The present invention approach the problem how a user adapted control of flows of data to and from a terminal in a communications system can be provided.

An object of the present invention is thus to provide a method and an apparatus for controlling flows of data in a communications system in accordance with a user's preferences.

The present invention solves the problem mentioned above by giving the user himself a possibility to control data flows to and from different applications on his terminal in accordance with his present preferences. When a user has several applications active on his terminal simultaneously, where several of these communicate through a communications network with other terminals or servers, the user will most likely have an opinion on which application he at the moment considers most important. None of said known flow control mechanisms provide a flow control that is suited to a user's preferences regarding which application/s he believes should be given priority at the moment. The user's preferences at a certain occasion can only be determined by the user himself. No intelligent algorithm can compute the user's preferences.

The user inputs, according to the invention, on his terminal, information relating to his preferences regarding which applications, with appurtenant flows, he thinks should be given more or less priority at a particular moment. The information is stored in memory in the terminal and is used by an FCA (Flow Control Application) on the user's terminal. The FCA controls in accordance with the user's preferences, the bandwidth proportion used by the data flows to and from applications on the terminal. Incoming data flows are controlled by manipulating a protocol flow control parameter and outgoing flows are controlled by manipulating sending times of data packets.

The invention provides embodiments of the invention in which the FCA limits, in accordance with the user's preferences, data flows to and from applications, which the user has classified as less important, so that more bandwidth becomes available to prioritised applications. An embodiment of the invention for controlling outgoing data flows provides a possibility to limit an outgoing flow by means of the FCA queuing packets out from the application and supervising their sending times thus controlling the data flow out from the application. An embodiment of the invention for controlling incoming data flows provides a possibility to limit an incoming data flow by means of the FCA overwriting a computed window size with a lower value, which is then, according to TCP or a similar protocol, reported as the current window size to a communications partner.

An advantage of the present invention is that a user is given a possibility to make adjustments on his own terminal in accordance with his own preferences regarding which active application he wants to prioritise. The possibility to make these adjustments might have a large impact on the user's perception of the terminal and of how user friendly and smooth it is to work with.

Another advantage with the present invention is that it provides an easy way for a user to control application flows to and from his terminal. It is also easy for the user to readjust the control as his preferences, regarding which flows that are more or less important, change.

Yet another advantage with the present invention is that it only requires adjustments in the user's terminal. The invention requires no adjustments, in order to be used and implemented, in other parts of the communications system, with which the terminal can communicate.

The invention will now be described with the aid of preferred embodiments and with reference to accompanying drawings.

### BRIEF DESCRIPTION OF THE DRAWINGS

Fig. 1 shows a block schedule over a terminal, its physical connection and application flows.
Fig. 2 shows i diagram over the format of the TCP header.
Fig. 3 shows a schedule over the layers of the TCP/IP protocol stack and over a packet passing through and being assembled in the layers.
Fig. 4 shows a schematic representation of a database, according to the invention, for storing application flow control information.
Fig. 5 shows a flow chart over one embodiment of the present invention.
Fig. 6a and fig. 6b show pie diagrams over bandwidth distributions between application flows on a conventional terminal.
Fig. 7a, fig. 7b, fig. 7c and fig. 7d show pie diagrams over bandwidth distributions between application flows on terminals making use of different embodiments of the invention.
Fig. 8 shows a view of an embodiment of a user interface according to the invention.
Fig. 9 shows a flow chart of a method according to the invention.

### DETAILED DESCRIPTION OF SPECIFIC EMBODIMENTS

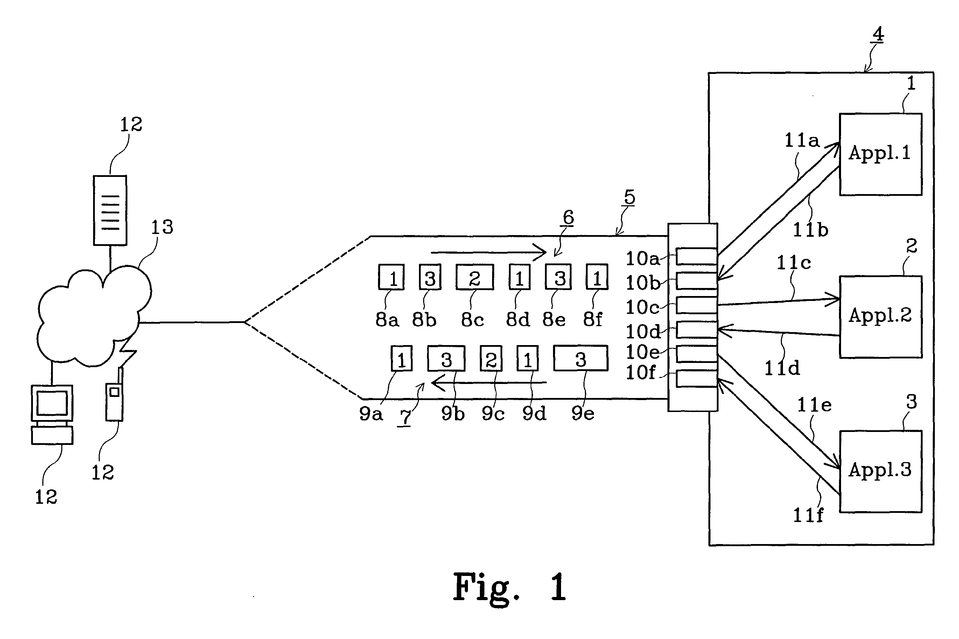

Fig. 1 shows a block schedule that demonstrates, on a basic and logical level, how applications 1, 2, 3 on a terminal 4 communicate via a physical connection 5 with other distant applications on terminals or servers 12 connected to the same packet switched communications network 13. The terminal 4 could for instance be a personal computer and the physical connection 5 a modem connection. The terminal 4 could also be a mobile phone or some other kind of wireless terminal. In that case the physical connection 5 would be an airborne radio connection. Independent of what type of terminal 1 and physical connection 5 is considered the bandwidth that can be used to communicate over the physical connection 5 is limited. Fig. 1 shows three active applications 1, 2, 3 on the terminal 4 that receive and send information over the physical connection 5. Assume for instance that the application 1 is an application that is used to download e-mails from a distant mail server and to read, write and send e-mails. Further assume that the application 2 is an application that is used to download a file from a server using FTP, and assume that the application 3 is an application that is used to read web pages from a WWW (World Wide Web) server using the protocol HTTP. The applications will give rise to incoming and outgoing data traffic, which travels through the physical connection 5 in an incoming channel 6 and an outgoing channel 7. Each channel has a certain limited bandwidth that limits the number of bytes of data that can pass through the physical connection per time unit. The three applications 1, 2, 3 have to share the available bandwidth. The most common situation in previously known systems is that the applications compete on equal terms for the available bandwidth. The applications communicate with data packets. In fig. 1 a number of incoming data packets 8a-8f are shown as boxes marked with a number that indicates to which application 1, 2, 3 the data packet is destined. A number of outgoing data packets 9a-9e are shown in a corresponding way, marked with a number indicating which application the data packet has originated from. As mentioned above port numbers are used to separate application flows on a computer. This is symbolically shown in fig. 1 as a number of ports 10a-10f, each one associated with either an incoming or an outgoing application flow 11a-llf. An incoming data packet 8 is marked with the port number that is associated with the application flow 11 that the packet is destined for. The port number thus works as an address that ensures that the data packet ends up on the right application flow. Observe that fig. 1 only is used to show the basic usage of port numbers. Port numbers and application flows can be utilised in more complicated ways in reality. The port number associated with a certain application flow may for instance change during a communication session or there may be more than one incoming and outgoing application flow associated with one application.

Now let us picture the user of the terminal 4 who has activated the above-mentioned three applications 1, 2, 3. We assume for this example that the terminal 4 is the users personal computer (PC) and that the physical connection 5 is a modem connection. Suppose that the user wishes to use the application 2 to download a large MP3-file, which will take a long time due to the limited bandwidth of the modem connection. While he is downloading the file the user also wishes to surf on the Internet, using the application 3, and download his e-mail, using the application 1. The user will probably have preferences as to which of his applications he thinks is most important to him at that particular moment. Maybe he thinks it is most important that he gets his e-mails downloaded to his PC quickly. He wants his Internet surfing to run as smoothly and quickly as possible, but he doesn't mind if the downloading of the MP3-file takes a while as long as he can use his other applications in a satisfactory way in the meantime. Today there are no known manner in which the user can give priority to different applications running on his computer. The present invention however provides the user with this possibility. The user may with the aid of the invention choke the incoming application flow 11c, which transports the data packets associated with the download of the MP3-file. By choking the application flow 11c it is here meant that the user might place an upper limit on how much bandwidth the application flow may use. When the bandwidth limit is lower than the bandwidth that the application would be able to attain in a non-restricted competition with the other application flows lla, lie, this results in that more bandwidth become available for the other non-restricted application flows lla, lie than otherwise would be the case. Even though the total bandwidth on the incoming channel 6 is unchanged, the user will in this way have indirectly allocated more bandwidth to the incoming application flows to the applications 1 and 2, by restricting the application flow to application 3. The result of this user intervention by using the invention will be that his e-mails will be downloaded more quickly, his surfing will run more smoothly and the MP3-file will be downloaded more slowly, than would have been the case without use of the invention. Thus the invention provides the user width the possibility to make adjustments of application flows in accordance with his preferences. This is achieved by allocating more bandwidth to highly prioritised applications and less bandwidth to applications with low priority. In this example the user was interested in giving different priority to different incoming application flows to his terminal, but the user will according to the invention also be able to give priority to outgoing application flows. The latter possibility, to control outgoing application flows, would however probably be of less interest to most users compared with the possibility to control incoming application flows. Therefore the focus of this description will be mainly on control of incoming application flows.

The invention uses an already existing flow control mechanism in TCP to give the user control over incoming application flows.

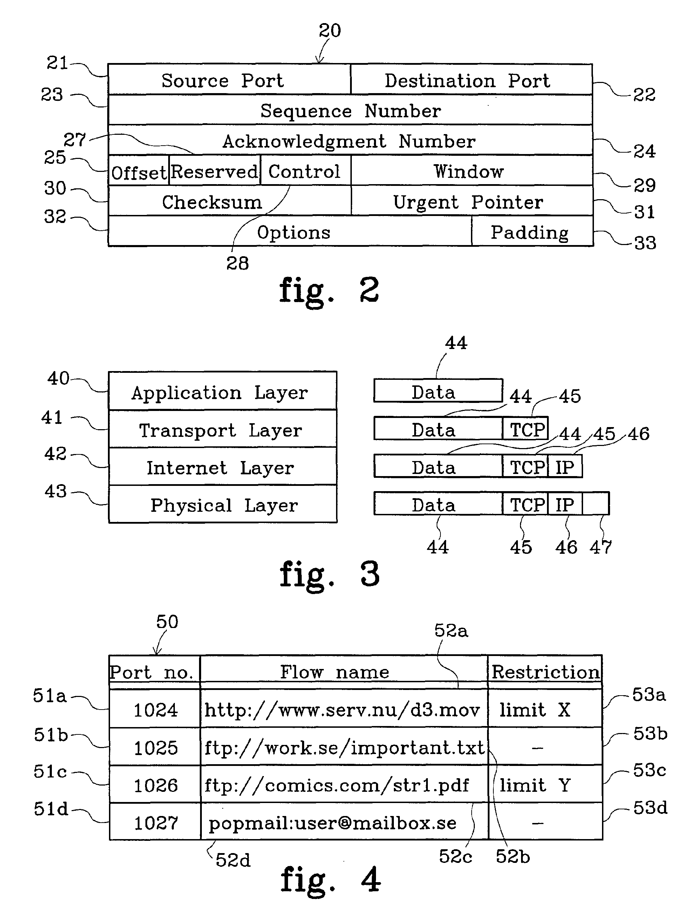

Fig. 2 shows the format of a TCP header 20. The TCP header carries information specific for TCP in different fields. The field 21 comprises the source port number and the field 22 comprises the destination port number. Both of these fields are 8 bits. The field 23 is 32 bits and includes a sequence number which, as mentioned above, is used to reassemble the data in the right order in the destination node and to keep track of the number of bytes that have been sent. The field 24 is used for acknowledgements to indicate to the receiver of the acknowledgement that a certain packet has been received. If an ACK control bit is set, the field 24 will contain the value of the next sequence number the sender of the current packet is expecting to receive. The field 25 is four bits and indicates the size of the TCP header in order for the receiver to know where the header ends and where the accompanying data begins. The field 27 is reserved for future use and the field 28 includes 6 control bits, of which one is the ACK control bit. The field 30 comprises a checksum, which is used to check for errors in the packet. The checksum is a function of the contents in the other fields of the packet. The field 31 can contain a so-called urgent pointer and the field 32 can vary in size and can contain options information. The field 33 contains a TCP header padding, which is used to ensure that the header is an integral number of 32 bits long. A field that is of great significance to the invention is the window-field 29. The window-field contains information on the number of additional bytes of data that the sender of this segment is willing to accept and is used for flow control. It is normally used when the application for which the data is intended doesn't manage to handle all the received data. For an application flow into a first application on a first terminal a window size will be computed that indicates how many additional bytes that can be received in the internal buffers that are set up for the application flow. The window size is transmitted in the window field with an ACK and indicates to a second application, with which the first application is communicating the maximum number of additional bytes that the second application can send to the first application. The invention uses the window-mechanism to restrict application flows with low priority for the user. The invention provides a Flow Control Application (FCA) that can overwrite the computed window size with a lower value for an incoming application flow that the user wants to choke. The sender of the data on the incoming application flow will receive this downsized window with an ACK and will adjust its sending rate to this reported window size. This will result in a decreased byte rate on the choked application flow, which thus occupies a smaller bandwidth than it would have if the computed window size hadn't been replaced by a lower value.

As mentioned above layered protocol structures are used to simplify the handling of protocols and TCP is a protocol that belongs to the transport layer in the TCP/IP protocol suite. The invention uses an already existing mechanism for flow control in TCP, but that does not mean that the FCA of the invention is limited to work in the transport layer. It can also be implemented to work in the Internet layer or in the physical layer.

Fig. 3 shows, schematically, a data packet being assembled and travelling through the layers of the TCP/IP protocol stack. The data 44 to be sent in a data packet is formed in the application layer 40. The data 44 is often called the payload of a data packet. In the transport layer 41 a TCP header 45 is added (provided that TCP is the transport protocol to be used). The TCP header 45 will, as described above, among other things contain the window field. After the transport layer, the half-built data packet will reach the Internet layer 42 where an IP header 46 is added. The IP header 46 will contain for instance an IP-address and a checksum. In the physical layer 43, a header 47 will be added containing for instance a physical address and a checksum. The type of header 47 will depend on the physical layer protocol used. It will be possible for the FCA to overwrite a value in the window field in the TCP-header 45 in any of the layers below the application layer. However when a value in the packet changes, the checksums that already have been computed and added to the packet will have to be recalculated. To implement the FCA to work in the transport layer would therefore be the option requiring the least checksum recalculations. In addition it is probably most natural to let the FCA work in the transport layer, since it is in this layer that the window size, that the FCA might overwrite, is computed and added to the packet.

The FCA can be implemented in software and/or hardware on the user's terminal. It will in most cases probably be preferable to implement it in software.

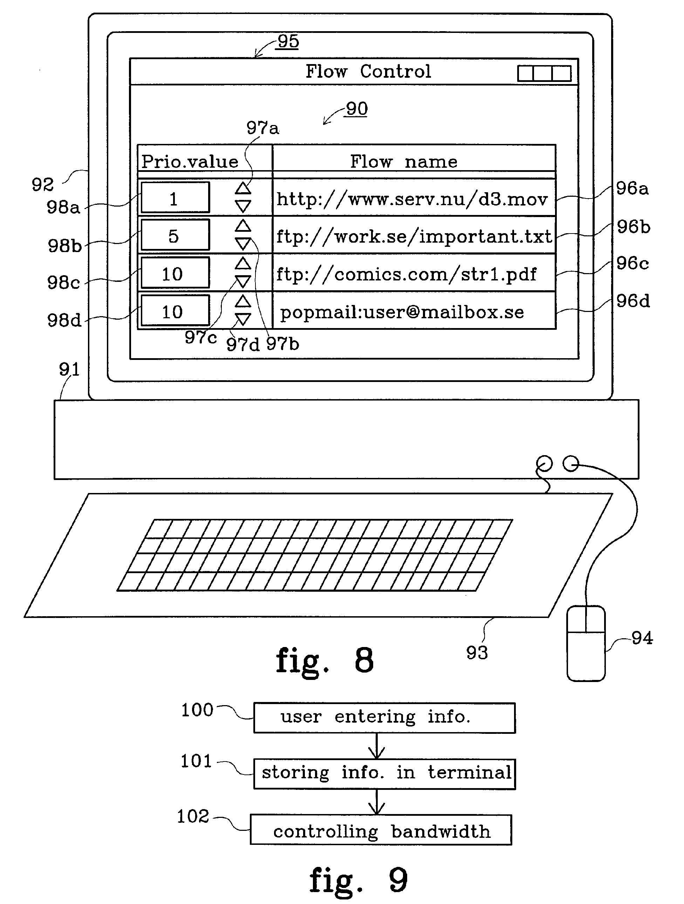

The overall idea of a method according the invention is demonstrated in fig. 9. According to the invention the user of the terminal enters, step 100, information relating to his opinion on the importance of different application flows into his terminal. As mentioned above it is not possible to calculate the user's preferences. Thus will the user himself enter the information about his preferences through some kind of user interface on the terminal and this information, or processed information based on the information entered by the user, is then stored, step 101, in memory in the terminal. The control, step 102, of bandwidth proportions used by the different application flows on the terminal is then based on the stored information relating to the user's preferences.

The FCA will preferably make use of a database in which the information relating to the user's preferences is stored. Fig. 4 shows an example database 50 and the type of information that might be stored in the database. The database must include information that identifies the different application flows, e.g. the port number 51a-51d each associated with an application flow. The database might also optionally include a text stream 52a-52d identifying the application flow. This text stream might be useful to present to the user on the user interface of the FCA when the user enters his preferences, since the user more easily can identify a flow by a text stream than by a port number. Associated with the information 51a-51d, 52a-52d identifying the respective application flows is information 53a-53d relating to the user's preferences stored. The FCA will use this information to decide whether a flow should be restricted or not. This information may, according to the invention, be in many different forms. One option might be to let the user restrict some flows to a maximum proportion of the total available bandwidth, or a maximum number of bits per second. Another option might be to let the user rank the flows in priority order and let an algorithm compute weights for each flow that are used as a base for the restriction decision or to let the user enter weighting factors for some or all flows. Yet another option is to let the user divide the application flows into service classes, such that for instance application flows using ftp are in a service class with lower priority than application flows using http.

If the FCA is implemented to allow the user to control both incoming and outgoing application flows according to his preferences, the database may contain information regarding whether a certain application flow is an incoming or an outgoing flow.

Other information that might be advantageous to store in the database 50 is information regarding the protocol that is used for each application flow in the transport layer and lower layers.

It is preferred to implement the FCA so that the user has the option to enter preferences relating to some or all flows, but is not required to do so. If no preferences are entered the application flows should be treated equally. A great advantage with the invention is that it allows the user to change his preferences and provides a possibility to adjust to the changes in the user's preferences instantly and easily.

Whenever an application flow gets a port allocated, the relevant information should be stored in the database used by the FCA. It is however important to note that not all incoming application flows will be possible to restrict with the FCA of the invention. Since the FCA uses the window mechanism in TCP or a corresponding mechanism in a future protocol, only flows using a protocol like TCP with an in-built flow control mechanism can be restricted. The FCA of the invention can thus not restrict incoming application flows using for instance UDP.

The description has so far mainly dealt with user control of incoming application flows. Outgoing application flows from a user's terminal can be controlled by means of a bit more straightforward methods. The invention allows the user to place restrictions on outgoing application flows in the same manner as for incoming application flows. The rate of an outgoing application flow is controlled by queuing the outgoing data packets on the application flow and letting the FCA supervise the timing of the sending of the packets. The application will not produce a new amount of data for the transport layer to transport until it notices that the previous amount of data that was forwarded to the transport layer has been sent. Thus the outgoing data rate from an application can be controlled in this manner.

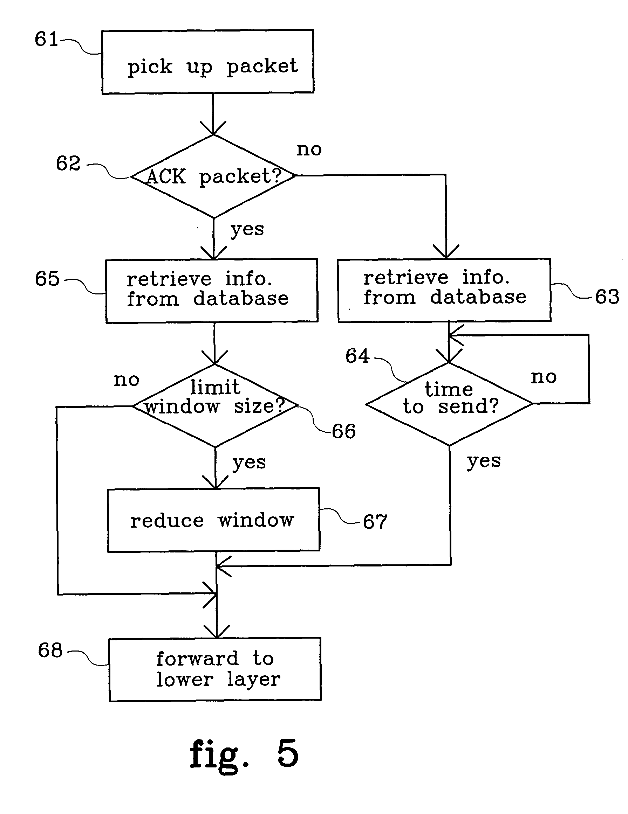

Fig. 5 shows a flow chart over an implementation of the invention in the transport layer. After the transport protocol has done its work in the assembling of an outgoing packet, the FCA of the invention will pick up the packet, step 61 and check whether or not the packet is an acknowledgement, step 62. If the packet is not an acknowledgement, it is a data packet associated with an outgoing application flow and the FCA then checks in the database if the flow rate of the outgoing application flow should be restricted or not, step 63. The information retrieved from the database is used to decide whether or not it is time to send the packet, step 64. If it is time to send the packet it is put forward to the next lower layer in the protocol stack, step 68, otherwise the packet is delayed until it is time to send it. If the outgoing packet is an acknowledgement packet, information regarding the user's preferences for the incoming application flow that corresponds to the acknowledgement is retrieved, step 65. The information is used to check whether or not the current window size in the packet, which has been computed by TCP, should be replaced with a lower value in accordance with the user's preferences, step 66. If the window size is to be reduced, the window size in the TCP header is overwritten with the new lower window value, which is obtained from the information regarding the user's preferences, , step 67. If the window size is overwritten after the checksum in the TCP header has already been calculated, this checksum must be recalculated and updated. If window size is overwritten before the checksum in the TCP header has been calculated there will be no need to recalculate any checksums due to the change of the window size. Then the acknowledgement packet is put forward to the next lower layer in the protocol stack, step 68.

If the invention is implemented in a layer below the transport layer, more than one checksum would have to be recalculated and updated in step 67 of fig. 5, as mentioned above.

Note that acknowledgement packets are not delayed. In order for the flow control to work efficiently acknowledgements are treated as important traffic which will be sent independent of possible restrictions on outgoing application flows.

It is also worth noticing that a computed window size only can be reduced (or left unchanged) and not increased. The computed window size represents the additional amount of data that the application can handle. Thus there is no point in replacing a window size computed by TCP with a larger value since this only would result in overrun and retransmissions which rather would slow the communication down than to speed it up.

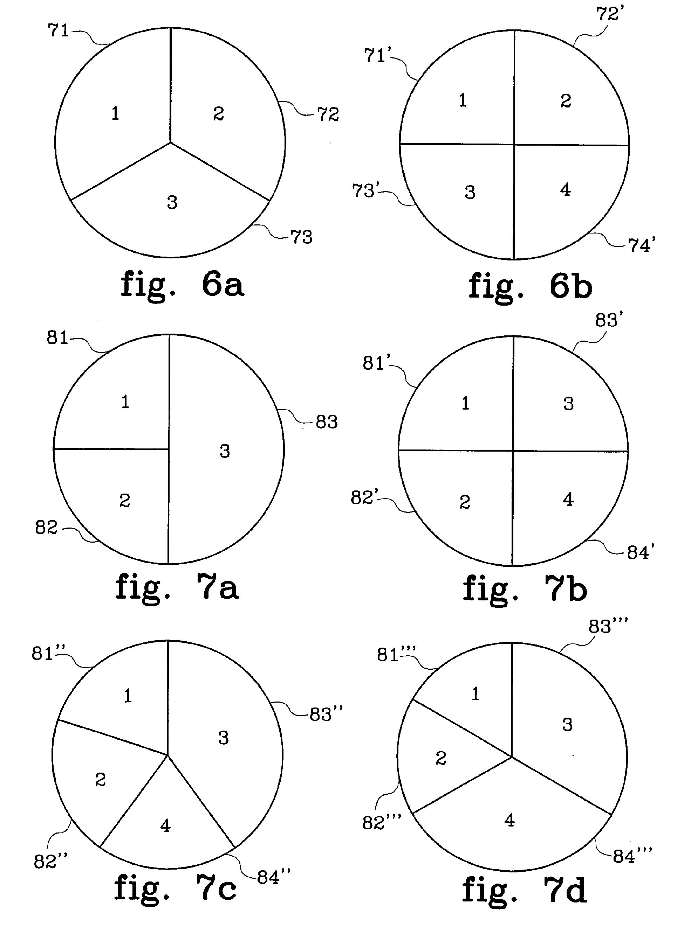

How new application flows are treated on a terminal that makes use of the invention will depend on the implementation of the invention. In a prior art terminal, where there are no priorities given to any application flows, the applications will compete on equal terms for the available bandwidth. This will probably result in a fairly even distribution of bandwidth between the present flows in or out from the terminal. Fig. 6a shows a pie diagram that should illustrate such a situation. Assume that three applications are active on a terminal. Portion 71 of the pie diagram illustrates the proportion of the available bandwidth in to the terminal that is associated with a first active application on the terminal. Analogously, portions 72 and 73 represent the bandwidth associated with a second and a third active application respectively. In a terminal where the inventive idea is not used the portions 71, 72 and 73 would probably be approximately equal in size and thus close to a third of the total available bandwidth. If a fourth application were activated, giving rise to a fourth incoming application flow to the terminal, the situation would probably change to a situation close to what is illustrated in fig. 6b. In fig 6b portion 74' represents the bandwidth share seized by the new fourth application flow. Portions 71', 72' and 73' represents the decreased share of bandwidth given to the application flows to the first, second and third application after the fourth application has been activated.

Now consider a terminal where the ideas of the invention are used. Assume that there are three active applications on the terminal, giving rise to three application flows in to the terminal. Further assume that the user has put restrictions on two of the flows limiting them to maximum a fourth of the available bandwidth each. This is illustrated in fig. 7a, where portion 81 represents the share of bandwidth of a first application flow, which is restricted to maximum a fourth of the available bandwidth, portion 82 represents the share of bandwidth of a second application flow, which is restricted in the same way as portion 81 and portion 83 represents share of bandwidth of a third application flow, which is unrestricted. Fig. 7a illustrates that the third application flow will get half the available bandwidth due to the restrictions on the first and second application flows. Now, what will happen if a fourth application is activated on the terminal, giving rise to a fourth incoming application flow? That will depend on the implementation of the invention and on the type of restrictions set. It is also possible to implement several options and let the user affect how new application flows are treated by means of option settings. Fig. 7b, 7c and 7d illustrates some possible results of bandwidth distribution when a fourth application flow come into an initial situation as illustrated in fig. 7a. It is here assumed that the user has not yet chosen a restriction or priority for the new fourth application flow. In fig. 7b, the first and second application flows still have bandwidth shares 81' and 82' which are equal (in theory) to a quarter. The third application flow however now have a bandwidth share 83' which is half of the initial bandwidth share 83. The new application flow gets a bandwidth share 84' which is also a quarter. In this situation the new application flow is by default treated as the other non-restricted application flows, which in this situation results in that the four application flows each get a quarter of the available bandwidth (in theory at least and probably close in practice). In considering fig. 7c and fig. 7d, assume that the restrictions on the first and second application flows are in the form of for instance weighting factors that for three application flows results in the situation as shown in fig. 7a. Fig. 7c shows a possible outcome when the fourth application flow is introduced and by default is given the same priority as the application flows with the lowest priority, which here means that the new fourth application flow gets a bandwidth share 84'' that equals the bandwidth shares 81" and 82'' of the first and second application flows. The bandwidth share 83'' of the third application with the highest priority is larger than the bandwidth shares of the other applications of lower priority. Fig. 7d shows a possible outcome when the fourth application flow is introduced and by default is given the same priority as the application flows with the highest priority, which here means that the new fourth application flow gets a bandwidth share 84''' that equals the bandwidth share 83''' of the third application flow. The bandwidth shares 81''' and 82''' of the first and second application are smaller than the bandwidth shares 83''' and 84''' which have higher priority.

In the examples above the new application flow have been given some kind of default priority or default restriction. Another possibility is to force the user to set a priority or restriction to a new application flow before allowing the new application to be activated.

A person skilled in the art appreciates that there are many different ways to distribute bandwidth between "new" and "old" application flows within the concept of the invention.

Fig. 8 shows an example of how a user interface 90 of the invention can look like. The terminal is in this case a personal computer 91, with a monitor 92, a keyboard 93 and a mouse 94. The monitor 94 shows a window 95 with a list 96 of names 96a-96d of the active application flows on the terminal. An arrow pointing up and down 97a-97h, and a value box 98a-98d is associated with each application flow. The value in the value box is a weighting factor, priority factor, restriction factor or the like that is used to represent the user's preferences related to the respective flows. The information regarding the user's preferences that is stored in the database of the FCA is based on the values in the value boxes 98a-98d and this information is as mentioned used to control the bandwidth used by the application flows. The user can change a value in a value box 98a-98d by clicking with a mouse pointer on the up or down arrow 97a-97h corresponding to that box or by placing a cursor and typing a value on the keyboard 93. It is thus easy for the user to control the bandwidth of different application flows in and out from his terminal according to his preferences and it is in addition easy to adjust said control when the user's preferences change.

An alternative embodiment of a user interface of the invention is a box with buttons that appear when for instance a download of a file from the Internet is to be commenced, inviting the user to choose a priority level for the application flow used for downloading the file. The buttons can for example be three representing a high priority, a normal priority and a low priority. The user may choose a priority level by clicking on the corresponding button. The amount of bandwidth assigned to the current application flow can then be determined by an algorithm of the FCA, based on the chosen priority level. The normal priority may be used as a default value that is used if the user doesn't make choice regarding the priority level of the flow. This is a very simple interface that only requires a simple choice between a number of alternatives from the user, but on the other hand provides less possibility for fine adjustments from the user. Which type of interface a user will prefer will, most likely, depend on his knowledge and experience in working with simultaneous application flows on his terminal.

## Claims

1. A method for controlling data flows to a terminal in a communications system, which data flows are carried over at least one communications connection with a limited bandwidth and with use of at least one protocol, **characterised in**,
a user of the terminal entering into the terminal information regarding his opinion on the importance of at least one of the individual data flows to different applications on the terminal;
storing information about the user's preferences, based on said information entered by the user, in a memory in the terminal;
controlling, through manipulation of at least one protocol parameter, the proportion of the available bandwidth used by the individual data flows to the applications on the terminal based on said stored information about the user's preferences.

2. A method according to claim 1, **characterised by** the controlling step involving restricting the bandwidth proportion used by at least one first flow to at least one first application in order to give a larger bandwidth proportion to at least one second flow to at least one second application.

3. A method according to claim 1 or 2, **characterised by** storing said information about the user's preferences for the respective individual data flows in a database in the terminal, in association with a port number assigned to the respective individual data flows.

4. A method according to claim 1, 2 or 3, **characterised by** controlling the bandwidth proportion used by individual data flows to the applications on the terminal by means of:
investigating if a data packet to be sent from the terminal is an acknowledgement packet;
if the data packet is an acknowledgement packet, retrieving the stored information on the user's preferences associated with the data flow to the terminal with which the acknowledgement packet is associated;
determining by comparing a window size of the acknowledgement packet to the retrieved information on the user's preferences if the window size should be reduced, which window size defines a maximum amount of unacknowledged data packets that a receiver of the acknowledgement packet should be allowed to send to the terminal on the data flow with which the acknowledgement packet is associated; and
reducing the window size, when so has been determined, by overwriting the window size with a lower value before sending said acknowledgement packet to the receiver.

5. A method according to claim 4, **characterised by** overwriting the window size when the acknowledgement packet is in a transport layer.

6. A method according to claim 4, **characterised by** overwriting the window size when the acknowledgement packet is in an Internet layer.

7. A method according to claim 4, **characterised by** overwriting the window size when the acknowledgement packet is in a physical layer.

8. A method for controlling data flows from a terminal in a communications system, which data flows are carried over at least one communications connection with a limited bandwidth, **characterised in**,
a user of the terminal entering into the terminal information regarding his opinion on the importance of at least one of the individual data flows from different applications on the terminal;
storing information about the user's preferences based on said information entered by the user, in a memory in the terminal;
controlling, through manipulation of sending times of data packets, the proportion of the available bandwidth used by the individual data flows from the applications on the terminal based on said stored information about the user's preferences.

9. A method according to claim 8, **characterised by** the controlling step involving restricting the bandwidth proportion used by at least one first flow from at least one first application in order to give a larger bandwidth proportion to at least one second flow from least one second application.

10. A method according to claim 8 or 9, **characterised by** storing said information about the user's preferences for the respective individual data flows in a database in the terminal, in association with a port number assigned to the respective individual data flows.

11. A method according to claim 8, 9 or 10, **characterised by** controlling the bandwidth proportion used by individual data flows from the applications on the terminal by means of:
investigating if a data packet to be sent from the terminal is an acknowledgement packet;
if the data packet is not an acknowledgement packet, retrieving the stored information on the user's preferences associated with the data flow from the terminal with which the data packet is associated;
determining by comparing the outgoing flow rate of the data flow with which the packet is associated to the retrieved information on the user's preferences if it is time to send the data packet to a receiver; and
delaying the data packet, when it is not time to send it, until it is time to send the data packet to the receiver.

12. A communications terminal, which terminal is arranged for connection to a communications system by means of a communications connection with a limited bandwidth for carrying data flows, which terminal comprises at least one memory, at least one input device on which a user can enter information into the terminal, **characterised in** the terminal further comprising
means for storing information about a user's preferences, based on information entered by the user on the at least one input device, regarding the user's opinion on the importance of at least one of the individual data flows to different applications on the terminal; and
means for controlling, through manipulation of at least one protocol parameter, the proportion of the available bandwidth used by the individual data flows to the applications on the terminal based on said stored information about the user's preferences.

13. A communications terminal according to claim 12, **characterised in that** the means for controlling comprise means for restricting the bandwidth proportion used by at least one first flow to at least one first application in order to give a larger bandwidth proportion to at least one second flow to at least one second application.

14. A communications terminal according to claim 12 or 13, **characterised in that** the terminal comprises a database for storing said information about the user's preferences for the respective individual data flows in association with a port number assigned to the respective individual data flows.

15. A communications terminal according to claim 12, 13 or 14, **characterised by** the means for controlling the bandwidth proportion used by individual data flows to the applications on the terminal comprising:
means for investigating if a data packet to be sent from the terminal is an acknowledgement packet;
means for retrieving the stored information on the user's preferences associated with the data flow to the terminal with which the acknowledgement packet is associated;
means for determining by comparing a window size of the acknowledgement packet to the retrieved information on the user's preferences if the window size should be reduced, which window size defines a maximum amount of unacknowledged data packets that a receiver of the acknowledgement packet should be allowed to send to the terminal on the data flow with which the acknowledgement packet is associated; and
means for reducing the window size by overwriting the window size with a lower value before sending said acknowledgement packet to the receiver.

16. A communications terminal according to claim 15, **characterised in that** the means for overwriting the window size is arranged to overwrite the window size when the acknowledgement packet is in a transport layer.

17. A communications terminal according to claim 15, **characterised in that** the means for overwriting the window size is arranged to overwrite the window size when the acknowledgement packet is in an Internet layer.

18. A communications terminal according to claim 15, **characterised in that** the means for overwriting the window size is arranged to overwrite the window size when the acknowledgement packet is in a physical layer.

19. A communications terminal, which terminal is arranged for connection to a communications system by means of a communications connection with a limited bandwidth for carrying data flows, which terminal comprises at least one memory, at least one input device on which a user can enter information into the terminal, **characterised in** the terminal further comprising
means for storing information about a user's preferences, based on information entered by the user on the at least one input device, regarding the user's opinion on the importance of at least one of the individual data flows from different applications on the terminal; and
means for controlling, through manipulation of sending times of data packets, the proportion of the available bandwidth used by the individual data flows from the applications on the terminal based on said stored information about the user's preferences.

20. A communications terminal according to claim 19, **characterised in that** the means for controlling comprise means for restricting the bandwidth proportion used by at least one first flow from at least one first application in order to give a larger bandwidth proportion to at least one second flow from at least one second application.

21. A communications terminal according to claim 19 or 20, **characterised by** that the terminal comprises a database for storing said information about the user's preferences for the respective individual data flows in association with a port number assigned to the respective individual data flows.

22. A communications terminal according to claim 19, 20 or 21, **characterised by** the means for controlling the bandwidth proportion used by individual data flows from the applications on the terminal comprising:
means for investigating if a data packet to be sent from the terminal is an acknowledgement packet;
means for retrieving the stored information on the user's preferences associated with the data flow from the terminal with which the data packet is associated;
means for determining by comparing the outgoing flow rate of the data flow with which the packet is associated to the retrieved information on the user's preferences if it is time to send the data packet to a receiver; and
means for delaying the data packet until it is time to send the data packet to the receiver.

23. A software program arranged to run on a communications terminal in a communications system, which terminal communicates by means of data flows carried over at least one communications connection with a limited bandwidth,
**characterised by**,
code for storing, in a memory in the terminal, information about a user's preferences, based on information entered into the terminal by a user, about the user's opinion on the importance of at least one of the individual data flows to different applications on the terminal; and by
code for controlling, through manipulation of at least one protocol parameter, the proportion of the available bandwidth used by the individual data flows to the applications on the terminal based on said stored information about the user's preferences.

24. A software program according to claim 23, **characterised in that** the code for controlling comprise code for restricting the bandwidth proportion used by at least one first flow to at least one first application in order to give a larger bandwidth proportion to at least one second flow to at least one second application.

25. A software program according to claim 23 or 24, **characterised in that** the software program comprises code for storing said information about the user's preferences for the respective individual data flows in a database in the terminal, in association with a port number assigned to the respective individual data flows.

26. A software program according to claim 23, 24 or 25,
**characterised by** the code for controlling the bandwidth proportion used by individual data flows to the applications on the terminal comprising:
code for investigating if a data packet to be sent from the terminal is an acknowledgement packet;
code for retrieving the stored information on the user's preferences associated with the data flow to the terminal with which the acknowledgement packet is associated;
code for determining by comparing a window size of the acknowledgement packet to the retrieved information on the user's preferences if the window size should be reduced, which window size defines a maximum amount of unacknowledged data packets that a receiver of the acknowledgement packet should be allowed to send to the terminal on the data flow with which the acknowledgement packet is associated; and
code for reducing the window size by overwriting the window size with a lower value before sending said acknowledgement packet to the receiver.

27. A software program according to claim 26, **characterised in that** the code for overwriting the window size is arranged to overwrite the window size when the acknowledgement packet is in a transport layer.

28. A software program according to claim 26, **characterised in that** the code for overwriting the window size is arranged to overwrite the window size when the acknowledgement packet is in an Internet layer.

29. A software program according to claim 26, **characterised in that** the code for overwriting the window size is arranged to overwrite the window size when the acknowledgement packet is in a physical layer.

30. A software program arranged to run on a communications terminal in a communications system, which terminal communicates by means of data flows carried over at least one communications connection with a limited bandwidth, **characterised by**
code for storing, in a memory in the terminal, information about a user's preferences, based on information entered into the terminal by a user, about the user's opinion on the importance of at least one of the individual data flows from different applications on the terminal; and by
code for controlling, through manipulation of sending times of data packets, the proportion of the available bandwidth used by the individual data flows from the applications on the terminal based on said stored information about the user's preferences.

31. A software program according to claim 30, **characterised by** that the code for controlling comprise code for restricting the bandwidth proportion used by at least one first flow from at least one first application in order to give a larger bandwidth proportion to at least one second flow from at least one second application.

32. A software program according to claim 30 or 31, **characterised by** that the software program comprises code for storing said information about the user's preferences for the respective individual data flows in a database in the terminal, in association with a port number assigned to the respective individual data flows.

33. A software program to claim 30, 31 or 32, **characterised by** the code for controlling the bandwidth proportion used by individual data flows from the applications on the terminal comprising:
code for investigating if a data packet to be sent from the terminal is an acknowledgement packet;
code for retrieving the stored information on the user's preferences associated with the data flow from the terminal with which the data packet is associated;
code for determining by comparing the outgoing flow rate of the data flow with which the packet is associated to the retrieved information on the user's preferences if it is time to send the data packet to a receiver; and
code for delaying the data packet until it is time to send the data packet to the receiver.
